Europäisches Patentamt

European Patent Office

Office européen des brevets

(11) Publication number: **0 264 994 B1**

## EUROPEAN PATENT SPECIFICATION

(45) Date of publication of patent specification: **02.01.92** (51) Int. Cl.⁵: **A01B 33/06, A01B 33/08**

(21) Application number: **87201881.7**

(22) Date of filing: **01.10.87**

(54) **A soil cultivating machine.**

(30) Priority: **02.10.86 NL 8602484**
**11.12.86 NL 8603153**
**22.09.87 NL 8702252**

(43) Date of publication of application:
**27.04.88 Bulletin 88/17**

(45) Publication of the grant of the patent:
**02.01.92 Bulletin 92/01**

(84) Designated Contracting States:
**DE FR GB IT NL**

(56) References cited:
**FR-A- 2 262 904**
**FR-A- 2 306 610**
**FR-A- 2 335 141**
**FR-A- 2 447 134**
**GB-A- 2 020 951**

(73) Proprietor: **C. van der Lely N.V.**
**Weverskade 10 P.O. Box 26**
**NL-3155 ZG Maasland(NL)**

(72) Inventor: **van der Lely, Cornelis**
**7 Brüschenrain**
**Zug(CH)**

(74) Representative: **Mulder, Herman et al**
**Octrooibureau Van der Lely N.V. Weverskade**
**10 P.O. Box 26**
**NL-3155 ZG Maasland(NL)**

## Description

The invention relates to a soil cultivating machine comprising a frame portion accommodating the drive for a plurality of soil working members which are power-driven about upwardly extending axes, said frame portion being box-like and including a trough-shaped part, the ends of which are closed by plates and the upwardly extending walls of which have edges to which a cover plate is bolted, a space being provided between the said edges and the cover plate and the said plates and the cover plate for receiving a sealant.

A soil cultivating machine of the kind set forth is known from the French patent specification 2 335 141. With this known machine means are provided which not only provide a space for receiving a sealant but also a kind of stiffening of the frame portion. This known construction has the advantage that a single means provides two functions. However, this construction is rather complicated and expensive and moreover increases the total weight of the frame portion; this has to be considered as a disadvantage, in particular when using the machine in combination with other implements, as for instance a sowing machine.

The invention has for its object to achieve a machine of the kind set forth with a much more simple construction regarding means for creating a space for receiving a sealant and for stiffening the frame portion at the same time.

In accordance with the invention there is provided a soil cultivating machine of the kind set forth, whereby apertures in the said edges and the said cover plate for receiving bolts accommodate bushings which are interconnected by means of a flange-shaped portion located between the cover plate and an edge. By means of this provision a space for receiving a sealant is achieved whereas at the same time by means of the flange-shaped portions of the bushing a sufficient stiffening of the frame portion is obtained.

The French patent application 2 306 610 relates to a soil cultivating machine comprising a frame portion accommodating the drive for a plurality of soil working members that are power-driven about upwardly extending axes. The frame portion is box-like including a trough-shaped part, the ends of which are closed by plates and the upwardly extending walls having edges to which a cover-plate is bolted. With this known construction there is provided a sealant between the cover-plate and the edges. The space in which the sealant is received is closed by means of a downwardly extending edge of the cover plate.

For a better understanding of the invention and to show how the same may be carried into effect, reference will now be made, by way of example, to the accompanying drawings, in which:

Figure 1 is a schematical plan view of a soil cultivating machine comprising a construction according to the invention;

Figure 2 is, to an enlarged scale, a view taken on the line II - II in Figure 1;

Figure 3 is a view taken on the line III - III in Figure 2;

Figure 4 is a view taken on the line IV - IV in Figure 2;

Figure 5 is a view taken on the line V - V in Figure 3;

Figure 6 is a view in accordance with Figure 4 of a second embodiment of a construction according to the invention, and

Figure 7 is, to an enlarged scale, a partial view in accordance with Figure 5 of a third embodiment of a sealing according to the invention.

The implement shown in the drawings concerns a soil cultivating machine, in particular one for the preparation of a seed bed.

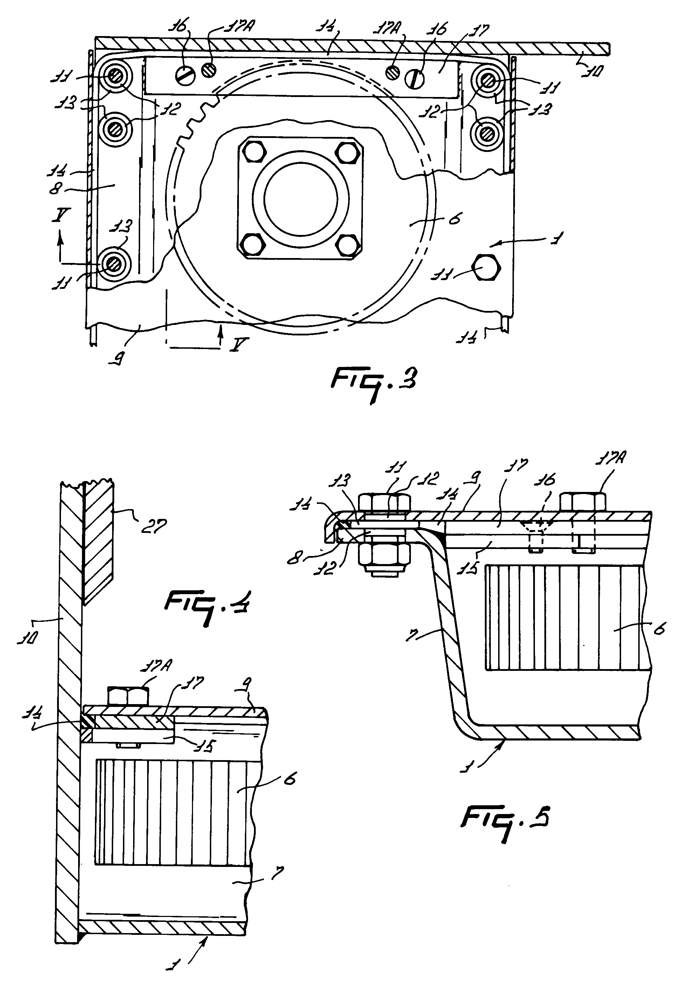

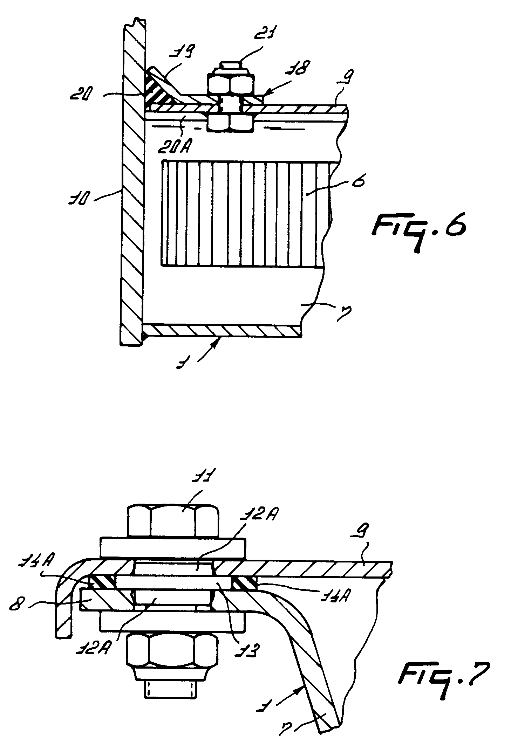

The machine comprises a box-like frame portion 1 which extends transversely to the direction of operative travel A and in which are bearing-supported, spaced apart equidistantly by preferably 25 cms, the upwardly, preferably vertically, extending shafts 2 of soil working members 3. At the end of each shaft 2 that projects from the bottom of the frame portion 1 there is provided a carrier 4 which extends at least substantially horizontally and near its ends is provided with downwardly extending soil working elements 5 afforded by tines. Within the box-like frame portion 1, each of the shafts 2 is provided with a pinion 6, the arrangement being such that the pinions 6 on the shafts 2 of adjacent soil working members 3 are in driving connection with each other. The box-like frame portion 1 constitutes a gear box wherein is contained a lubricant for the gear wheels. For this purpose it is necessary for the box-like frame portion 1 to be constructed in such a manner that leakage of lubricant therefrom is prevented. The frame portion 1 comprises a trough-shaped part 7 of an at least substantially trapezoidal cross-section and having upwardly extending longitudinal walls which diverge upwardly and at the upper side are bent over a portion 8 in an at least substantially horizontal direction, which portions 8 constitute an edge for the attachment of a cover plate 9. The ends of the trough-shaped part 7 are closed by means of plates 10 extending at least substantially parallel to a plane parallel to the direction of operative travel A. The plates 10 are arranged to the walls of the trough-shaped part 7 by means of welding. In order to ensure a tight sealing between the cover plate 9 and the edges 8 of the trough-shaped part 7, the longitudinal edges of said cover plate 9 are partly bent downwardly at a right angle (Figure 2). The cover plate 9 is mounted on the edges 8 of the trough-shaped part 7 by means of bolts 11. For this purpose, the edges 8 and the cover plate 9 are provided with apertures accommodating bushings 12 which are integral with a flange-shaped portion 13 located between the cover plate 9 and an edge 8. In this manner there is provided between the cover plate 9 and an edge 8 a space between the outer side of the flange-shaped portion 13 and the bent portion of the cover plate 9 for receiving a sealant 14. The sealant 14 is ribbon-shaped and is arranged over the entire upper circumference of the trough-shaped part 7 below the cover plate 9. At the side of the end plates 10 there is provided a space by means comprising a strip 15 which is welded at the level of, and preferably approximately 3 mms below, the upper side of the edges 8 between the upwardly extending walls of the trough-shaped part 7 (Figure 5). As a result, the strip 15 has some clearance relative to the cover plate 9. The strip 15 reaches to an end plate 10 (Figure 4). In order to be able to mount the pinions 6 on the shaft 2 of an outermost soil working member 3, the strip 15 is provided at the inner side with a circular recess corresponding to the circumference of a pinion 6 (Figure 3). By means of bolts 16 there is mounted on the strip 15 a strip 17, which strip has a thickness which is such that the space between the strip 15 and the cover plate 9 is filled thereby (Figure 5), said cover plate 9 being mounted on said strip by means of bolts 17A. Furthermore, the strip 17 is arranged such that between said strip and an end plate 10 there remains a space for receiving the ribbon-shaped sealant 14, the arrangement being such that said sealant constitutes an effective seal between the cover plate 9 and an end plate 10 (Figure 4). In the embodiment shown in Figure 6, a strip 18 is arranged on the cover plate over the entire width. At the side of the end plate 10, the strip 18 is bent upwardly at an angle of at least 30° over a portion 19. Said portion 19, which extends straightly and reaches towards the end plate 10, encloses a space accommodating a sealant 20. The ends of said sealant 20 are contiguous to a sealant 20A between the edges 8 and the cover plate 9. By means of bolts 11 located near the ends and a bolt 21 near the centre, the strip 18 is attached to the cover plate 9.

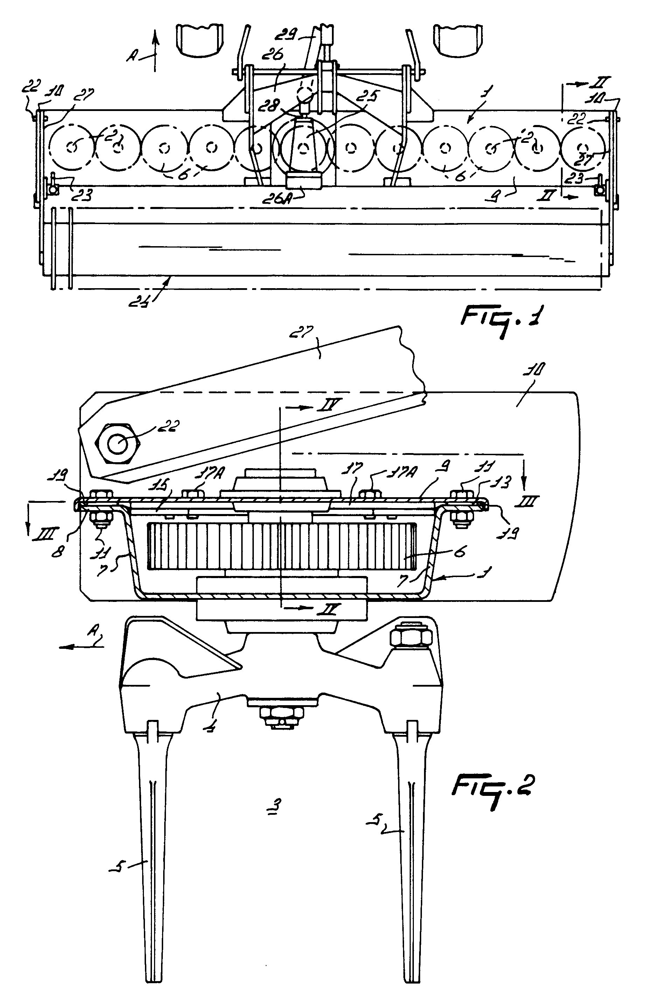

In the embodiment shown in Figure 7, bushing-shaped portions 12A taper towards the ends, so that a proper connection is obtained on the edges of the apertures punched in the edge 8, respectively in the cover plate 9. In this embodiment, the sealant 14A is strip-shaped, while apertures are provided for the bushing-shaped portions 12A and the flange-shaped portions 13. At the side of the end plates 10 there is employed, in this embodiment, a seal as is shown in Figure 6 and as is described in the foregoing. At the front side above the box-like frame portion 1, each end plate 10 has a pivot pin 22 extending transversely to the direction of operative travel A, about which pin there is arranged pivotally an arm 27 extending rearwardly along the inner side of the plates 10. By means of a threaded spindle 23 provided at the rear side of the box-like frame portion 1 between the arm and said frame portion, each arm can be adjusted to a plurality of positions and be locked therein. In the first embodiment, the lower side of each arm 27 is sharpened so as to avoid that earth is pressed between an end plate 10 and the cover plate 9 by said lower side during adjustment of the arm. Between the rear ends of the arms 27 there is arranged freely rotatably a roller 24 (shown schematically in Figure 1), which may be designed as a packer roller or as a cage roller. Near the centre, the shaft 2 of a soil working member 3 is extended upwardly and by means of this extension reaches to into a gear box 25 mounted at the upper side of the box-like frame portion 1 on the cover plate 9. Inside the gear box 25, the said extension is in driving connection via a bevel gear transmission and a speed variator 26A located at the rear side of the gear box with a shaft 28 which extends in the direction of operative travel A and projects beyond the gear box at the front side. Near its centre, the box-like frame portion 1 is provided with a trestle 26 which has a three-point connection for coupling the machine to the three-point lifting hitch of a tractor.

During operation, the implement is coupled to the three-point lifting hitch of a tractor by means of the trestle 26 and is moved in the direction indicated by the arrow A. Hereby, each of the soil working members 3 can be rotated from the power take-off shaft of the tractor via an intermediate shaft 29 and the above-described transmission, whereby adjacent soil working members rotate in opposite directions and cultivate by means of their soil working elements 5 at least adjoining strips of soil. The working depth of the soil working members 3 can be set by means of the roller 24 which is located behind said soil working members and which, as stated above, can be adjusted to and locked in a plurality of positions by means of the threaded spindles 23 and the pivotal arms 27. As was already indicated in the foregoing, the box-like frame portion 1 contains a lubricant for the pinions 6, while the above-described sealing provides such a seal for the space between the cover plate 9, the bent edges 8 of the trough-shaped part 7 and the end plates 10 that no leakage thereof occurs. With the aid of the means arranged at the ends of the box-like frame portion 1 and comprising the strips 15 and 17, respectively the strip 18, it is possible to provide in a simple manner between an end plate 10 and the cover plate 9 a space for receiving the sealant 14, respectively 20. The sealant 14, respectively 20, may be part of a continuous ribbon which, near the centre of the frame portion, may be enclosed with overlapping ends between the cover plate 9 and a bent edge 8 of the trough-shaped part 7.

As has been found, by using the bushings 12, respectively 12A, reaching to into the apertures provided in the cover plate 9 and in the edges 8 with located therebetween the flange-shaped portion 13, on which flange-shaped portions the cover plate 9 bears, it is possible to obtain an effective stiffening of the frame portion, while, if it is ensured that the lowermost bushing exactly fits in an aperture provided in a bent edge, it is achieved that upon removal of the cover plate 9 the bushings remain in their position in the apertures provided in the edges 8 of the trough-shaped part 7 and are not easily lost.

## Claims

1. A soil cultivating machine comprising a frame portion (1) accommodating the drive for a plurality of soil working members (3) which are power-driven about upwardly extending axes, said frame portion (1) being box-like and including a trough-shaped part (7), the ends of which are closed by plates (10) and the upwardly extending walls of which have edges (8) to which a cover plate (9) is bolted, a space being provided between the said edges (8) and the cover plate (9) and the said plates (10) and the cover plate (9) for receiving a sealant (14, 14A, 20), characterized in that apertures in the said edges (8) and the said cover plate (9) for receiving bolts (11) accommodate bushings (12, 12A) which are interconnected by means of a flange-shaped portion (13) located between the cover plate (9) and an edge (8).

2. A soil cultivating machine as claimed in claim 1, characterized in that the said bushings (12A) taper towards their free ends.

3. A soil cultivating machine as claimed in claim 1 or 2, characterized in that a sealant (14, 14A, 20) is provided between a downwardly extending edge of the cover plate (9) and the outer side of the flange-shaped portions (13) of the bushings (12, 12A).

## Revendications

1. Machine pour cultiver le sol comprenant une partie de chassis (1) contenant la transmission d'entraînement pour une pluralité d'organes de travail du sol (3) motorisés, tournant autour d'axes s'étendant vers le haut, ladite partie de chassis (1) étant en forme de caisson et comprenant une partie (7) en forme d'auge dont les extrémités sont obturées par des plaques (10), les parois de ladite partie (7) s'étendant vers le haut ayant des rebords (8) sur lesquels est boulonnée une plaque de couverture (9), un espace étant prévu entre lesdits rebords (8) et la plaque de couverture (9) et entre lesdites plaques (10) et la plaque de couverture (9) pour recevoir un moyen d'étanchéité (14, 14A, 20),

**caractérisée** en ce que les ouvertures dans lesdits rebords (8) et dans ladite plaque de couverture (9) pour recevoir des boulons (11) contiennent des bagues (12, 12A) qui sont interconnectées au moyen d'une partie (13) en forme de collerette située entre la plaque de couverture (9) et un rebord (8).

2. Machine pour cultiver le sol selon la revendication 1, caractérisée en ce que lesdites bagues (12A) s'amincissent en direction de leurs extrémités libres.

3. Machine pour cultiver le sol selon la revendication 1 ou 2, caractérisée en ce qu'un moyen d'étanchéité (14, 14A, 20) est prévu entre un rebord de la plaque de couverture (9), ce rebord s'étendant vers le bas, et le côté extérieur des parties (13) en forme de collerettes des bagues (12, 12A).

## Patentansprüche

1. Bodenbearbeitungsmaschine mit einem Gestellteil (1), in dem der Antrieb für eine Mehrzahl von Bodenbearbeitungsgliedern (3) untergebracht ist, die um aufwärts gerichtete Achsen zwangläufig angetrieben sind, wobei das Gestellteil (1) kastenartig ist und einen trogförmigen Teil (7) aufweist, dessen Enden mit Platten (10) abgeschlossen sind, und dessen aufwärts gerichtete Wände Ränder (8) aufweisen, an die eine Deckplatte (9) angeschraubt ist, wobei zwischen den Rändern (8) und der Deckplatte (9) sowie den genannten Platten (10) und der Deckplatte (9) ein Spalt zur Aufnahme einer Dichtung (14, 14A, 20) vorhanden ist, dadurch gekennzeichnet, daß in Öffnungen, die in den Rändern (8) und der Deckplatte (9) zur Aufnahme von Bolzen (11) vorgesehen sind, Buchsen (12, 12A) untergebracht sind, die durch einen flanschförmigen Teil (13) verbunden sind, der zwischen der Deckplatte (9) und einem Rand (8) angeordnet ist.

2. Bodenbearbeitungsmaschine nach Anspruch 1, dadurch gekennzeichnet, daß die Buchsen (12A) in Richtung auf ihre freien Enden verjüngt sind.

3. Bodenbearbeitungsmaschine nach Anspruch 1 oder 2, dadurch gekennzeichnet, daß zwischen einem abwärts gerichteten Rand der Deckplatte (9) und der Außenseite der flanschförmigen Teile (13) der Buchsen (12, 12A) eine Dichtung (14, 14A, 20) vorhanden ist.

FIG.1

FIG.2

FIG.3

FIG.4

FIG.5

7

FIG.6

FIG.7